# EUROPEAN PATENT APPLICATION

(11) **EP 2 368 651 A1**
(43) Date of publication of application: **28.09.2011**
(21) Application number: 09756124.5
(22) Date of filing: 12.10.2009
(51) Int. Cl.: B21D 53/78, B23P 15/04, B21K 3/04

(54) **METHOD FOR PRODUCING A HOLLOW FAN BLADE**

(30) Priority: 24.12.2008 RU 2008151433
(71) Applicant: Open Joint Stock Company "Aviadvigatel", Perm 614990 (RU); Institute For Metals Superplasticity Problems Of The Russian Academy Of Sciences, Respublika Bashkortostan 450001 (RU)
(72) Inventor: KOKSHAROV, Nikolay Leonidovich, Perm 614068 (RU); KHARIN, Sergey Alexandrovich, Perm 614051 (RU); KLIMOV, Valery Nikolaevich, Perm 614007 (RU); MOROZOV, Mikhail Alexandrovich, Perm 614111 (RU); SAIRANOV, Azat Nailievich, Perm 614007 (RU); DONGAUZER, Konstantin Alexandrovich, Perm 614090 (RU); ANDREYCHENKO, Igor Leonardovich, Perm 614039 (RU); MULYUKOV, Radik Rafikovich, Respublika Bashkortostan 450097 (RU); KRUGLOV, Alexey Anatolievich, Respublika Bashkortostan 450081 (RU); LUTFULLIN, Ramil Yavatovich, Respublika Bashkortostan 450106 (RU); SAFIULLIN, Rinat Vladikovich, Respublika Bashkortostan 450092 (RU); RUDENKO, Oleg Alexandrovich, Respublika Bashkortostan 450105 (RU); MUKHAMETRAKHIMOV, Minnaul Khidiyatovich, Respublika Bashkortostan 450105 (RU)
(74) Representative: Isenbruck, Günter
(86) International application number: PCT/RU2009/000534
(87) International publication number: WO 2010/074598

(57) **Abstract**

A method for manufacturing a hollow fan blade of a titanium alloy, said blade consisting of skins and a filler forming stiffeners, comprises the step of working skin workpieces with a preformed blade root portion, during which working on surfaces of the skin workpieces, areas to be bonded to a filler workpiece are shaped in the form of projections with a surface flat in a cross-section, and areas to be not bonded to the filler workpiece are shaped in the form of recesses, respectively, wherein at least a part of a surface of recesses opposite to projections in a stack assembled for diffusion welding is made flat in a cross-section, and also comprises the steps of: applying a bond preventing coating onto surfaces of workpiece areas to be not bonded; assembling the skin and filler workpieces into a stack; diffusion welding the skin and filler workpieces; forming stiffeners by superplastic forming, the method further comprises the step of providing the skin and filler workpieces with an aerodynamic profile by applying a deforming load thereto, including forming a pressure face and a suction face of the blade and twisting its airfoil. The method is **characterized in that** said projections and recesses are made on the surfaces of the skin workpieces prior to providing them with the aerodynamic profile, while the step of providing the workpieces with the aerodynamic profile is performed after diffusion welding.

The method is particularly applicable to aircraft engine building.

## Description

### Field of the invention

The invention relates to the field of metal forming, more particularly to methods for manufacturing hollow fan blades of titanium alloys, said blades consisting of skins and a filler forming stiffeners, by superplastic forming and diffusion welding. The method is particularly applicable to aircraft engine building.

### Description of the Prior Art

Known in the art is a method for manufacturing an article such as a hollow fan blade of a titanium alloy [I], said blade consisting of skins and a filler forming stiffeners, by superplastic forming and diffusion welding,

The method comprises the steps of:
(a) marking areas on skin workpieces, said areas being and not being bonded to a filler workpiese, by applying a bond preventing coating onto surfaces of the workpieces;
(b) assembling blank workpieces into a stack and sealing the stack over a contour;
(c) heating the stack to remove volatile components of the bond preventing coating;
(d) heating the stack and applying a pressure thereto for diffusion welding the workpieces together;
(e) internally pressurizing the resulting semifinished article by a working fluid to break the adhesive bond between the workpieces and the bond preventing coating, the adhesive bond being broken by applying a constant pressure of the working fluid supplied into the semifinished article interior at room temperature;
(f) heating the semifinished article and internally pressurizing it by the working fluid for superplastically forming at least one workpiece to produce a finished article with stiffeners.

Values of temperature and pressure for the diffusion welding are selected in view of a flow stress in a material of the workpieces to be joined, the flow stress being, in turn, defined by an alloy grade and initial structures of the workpieces.

Temperature and rate conditions of the forming are selected in accordance with standard superplastic deformation conditions for a given alloy.

Also known in the art is a method [2] for manufacturing an article, such as a hollow fan blade; in addition to the aforementioned steps of the method [1], this method comprises the step of applying a deformation load to the skin and filer workpieces to give an aerodynamic shape thereto. The present step is carried out after the diffusion welding step, in other words, at the stage of machining the semifinished article. The step comprises the sub-steps of: cambering the semifinished article to form a suction face and a working portion, that is, a pressure face, of the blade; and twisting one end of the semifinished article relative to the other end. A heating temperature is selected to be slightly lower than a diffusion welding temperature. The step is carried out in a fixture specially designed to carry out it [3].

Diffusion welding is one of the basic steps of the prior art methods and has an influence on the quality of the future article. Generally, the diffusion welding gives rise to specific bond defects such as micropores and scores, while exclusion thereof does not always work. A score is an edge defect of a bond zone, said defect taking the form of a recess along a bonding line. From the viewpoint of the theory of plasticity, the score in diffusion welding can be explained by a negative effect of prime compression stresses on generation of a physical contact between workpieces to be welded, said stresses acting with the highest effectiveness in boundary layers of bonded workpieces. Occurrence of micropores generated in a bond zone at the stage of generating a physical contact can be explained by said negative effect of micropores as well.

Experimental studies of a microstructure in a zone of a bond obtained in the same manner as in the methods [1,2] show a chained cluster of micropores located mainly over the periphery of bond areas.

Explanation of a cluster of micropores is also possible from the viewpoint of the theory of plasticity. A diffusion welding pressure applied to blank workpieces acts initially on areas where a bond preventing coating was applied, the coating is compacted and pressed in into a ductile material of the workpieces. Stresses in the worcpieces are distributed according to the Prandtl solution of the problem of pressing in a hard die with a flat base into a ductile medium [4, 5], wherein the bond preventing coating can be considered as an approximation of said die. At the same time, several regions are formed under the bond preventing coating, said regions being characterized by different stressed states. A region characterized by uniform compression is under the bond preventing coating itself and regions characterized by prime compression in parallel with a filler surface are arranged at the two sides of said region. The regions of prime compression in parallel with the filler surface are arranged along the perimeter of the bond preventing coating, with propagation to the filler workpiece surface areas to be bonded. As already noted, such compression stresses are unfavorable for performing deformation required to generate a physical contact. As a result, it is the periphery of the bond areas where clusters of micropores occur. Further, the prime compression stresses in parallel with the filler surface around the perimeter of the bond zone assist in increase of the duration of scores. Arrangement of the clusters of micropores in immediate proximity to relative long scores results in occurrence of weakened cross-sections and thereby reduces the performance of an article, because there are peripheral areas that give rise to development of fatigue cracks. This is one of the basic disadvantages of the considered methods [1,2].

Another essential disadvantage of the methods [1, 2] is associated with the intensive force action to the bond preventing coating and therefore with the risk of violating its integrity as well: it is the ability of coating particles to come in the bond areas. Such the ability exists because an initial contact between the skin and filler workpieces occurs over areas where the coating was applied, wherein areas to be bonded are still exposed during force action to the coating. Since particles come in the bond areas, additional bond defects appear.

A method for manufacturing an article, such as hollow fan blade, of a titanium alloy by superplastic forming and diffusion welding [6] makes it possible to eliminate the abovementioned disadvantages to a certain extent, said method comprising the steps of: marking areas on skin workpieces, said areas being and not being bonded; assembling blank workpieces into a stack; heating the stack and applying a pressure thereto for bonding the workpieces by diffusion welding to produce a semifinished article; heating and supplying a pressurized working fluid for superplastic forming a filler workpiece to produce an article of a predetermined shape.

An aspect of the method is that the diffusion welding is performed through pads of a titanium alloy having a flow stress less than that in the worcpieces. Use of the pads in the method [6] allows immediate generation of a contact over surfaces to be welded. At the same time, as noted above, an initiate contact between the filler and skin workpieces in the methods [1, 2] is generated at the areas that are not bonded.

The pads also serve as a barrier making it impossible for the coating particles to come in the bond zone.

The pads allow localization of forces at the areas to be bonded, which makes it possible to use pressing equipment of a lower power.

Due to the pads, gaps are left after the diffusion welding between the filler workpiece and the skin workpieces at areas not bonded in zones adjoining the pads, said gaps assisting in breakage of the adhesion bond between the workpieces at the forming step, that is, without use of a separate step for breaking, as in the methods [1, 2].

A flow stress being less in the pads of the titanium alloy than that in the workpieces is provided by using pads of the same alloy as that for the workpieces, but with a smaller grain size. In other case, it is possible to manufacture the pads of other titanium alloy that has a smaller flow stress than the alloy used to make blank workpieces, even at the same or greater grain size.

Due to use of the pads more ductile than the workpieces, the distribution of stresses in the bond zone approximates the Prandtl solution of the problem of compression of a thin plastic layer of a finite thickness between rigid parallel plates [4, 5]. Several zones characterized by different stressed states are also formed, exactly, a rigid zone opening onto the surface at a centre of a pad, and ductile zones around the periphery of the pad. Tensile stresses are more favorable to perform deformation required to generate a physical contact than prime compression stresses. Said distribution of stresses assists in elimination of a cluster of micropores at the periphery of bond areas and in decrease of scores. And though the defects, such as the clusters of micropores, are not completely eliminated as a result of using the pads, but said defect become distant from the periphery and do not cause occurrence weakened cross-sections. Despite the above advantages, the method has disadvantages that restrain its use in batch production. It is possible to ascribe increase in the number of bond zones in an article to the disadvantages of said method. Furthermore, the pads are cut of a sheet, and more exactly of strips, with a high degree of accuracy, which is a sufficiently labor-consuming process. But the step associated with accurate positioning and fastening the pads on the surface of the skins is characterized by the most difficulty. In doing so, the step of applying the bond preventing coating onto the surface of the workpieces is not excluded though said surface can be made with a smaller accuracy and therefore with the smaller labor consumption than in the methods [1, 2], due to the presence of the pads. Metallurgical plants currently use thin-sheet rolled metals with a grain size of 1 to 3 µm and have a perspective possibility to produce thin-sheet rolled metals with a grain size less than 1 µm. Such sheets are used to manufacture a filler workpiece. As compared to the filler, pads should have a notably smaller grain size to realize the situations of compressing a thin plastic layer between rigid plates. However, it is possible to have such a grain size in the pads only using special working methods, such as isothermal rolling. Use of a thin-sheet rolled metal with a grain size more than 3 µm as a filler workpiese subjected to superplastic forming is inexpedient. It should be noted that all the considered methods [1, 2, 6] do not reflect technological aspects of the process for manufacturing a hollow fan blade. Particularly, three thin commercial sheets of 1 mm thick are used to manufacture an article in [6] while a real blade has a significant difference between a thickness of a blade root portion and a blade airfoil portion. Further, the blade airfoil portion itself has a variable thickness. A skin including the blade root portion is made of a plate of a sufficient thickness by hot die forging and subsequent machining or only by machining. The method [7] taken as the closest prior art reflects technical aspects of manufacturing a hollow fan blade consisting of skins and a filler forming stiffeners in the most complete way, said method comprising the steps of:
- hot die forging skin and filler workpieces with preforming blade root and airfoil portions and also with providing the workpieces with an aerodynamic profile, including forming a pressure face and a suction face of the blade and twisting its airfoil;
- machining the skin workpieces to obtain areas to be bonded in the form of projections having a surface which is flat in a cross-section and respectively of respective areas not to be bonded in the form of recesses, wherein at least a part of a surface of recesses opposite to projections in a stack assembled for diffusion welding is made flat in a cross-section;
- assembling the skin and filler workpieces into a stack and diffusion welding the skin and filler workpieces, wherein a bond preventing coating is applied onto surfaces of skin workpiece areas to be not bonded prior to the step of assembling the stack;
- steps of shaping the stiffeners by superplastic forming by supplying a pressurized working fluid into an inner cavity of the stack.

There is a certain technological expediency in the overlapping of techniques of forming a necessary material reserve in a region of the blade root portion and of providing the workpieces with an aerodynamic profile, said expediency consisting in exclusion of the need to have special equipment, for example in the method [2], however, such overlapping involves complication of the method as well.

First, application of the bond preventing coating onto the curvilinear surfaces of the skin workpieces is a step exceeding the steps of the methods [1, 2, 6] in labor consumption. This step is performed for at least six sub-steps including the sub-steps of: applying a mask; cutting and roughing the mask; chemical treatment and machining the surfaces, including making recesses along boundaries of the projections to be bonded by diffusion.

Second, at presence of curvilinear surfaces of the skin and filler workpieces - due to their possible movement relative to each other in assembling the stack, sealing the stack and in progress of applying a pressure for welding, - a risk of violating the integrity of the bond preventing coating increases, and the Specification of said Patent speaks of this fact directly. The ability of the skin and filler workpieces to move relative to each other is caused also by that the hot forging of the skin and filler workpieces is performed in different dies, wherein accomplishment of the complete identity in profiles of the skin and filler workpieces is impossible.

Said recesses reduce the risk of violating the integrity of the coating.

The machining of the curvilinear surfaces of the skin and filler workpieces to form recesses and projections thereon is also labor consumable. However, the presence of the projections and recesses makes the step of applying the bond preventing coating less labor consumable in a certain extent. A height of the projections and a depth of the recesses, respectively, as well as a coupling radius between them are selected from technological considerations. In doing so, it is necessary to aim at reduction in the height of the projections and the depth of the recesses, respectively. First, the height of the projections should not influence on the process of shaping the stiffeners and should not introduce any aspects to the design thereof. Second, when an isostatic pressure is applied to the workpieces in the diffusion welding, folds are generated at the surfaces of the skin workpieces, a depth of said folds depending upon the height of the projections. The folds at the side of the skin workpiece that forms the suction face are removed in its forming. At the same time the folds at the side of the skin workpiece that form the pressure face may be removed only by machining.

As to the coupling radius between the projections and the recesses it should be noted that it is finally formed in superplastic forming the filler workpiece and is retained in the design of the finished article and simultaneously play a positive role as a member excluding the influence of a stress concentrator at a location where a stiffener is connected to a skin.

The projections formed in the process of machining at the bond areas finally have flat surfaces in cross-sections. Therefore, when touching the filler workpiece having a curvilinear profile in its cross-section, said profile repeating the profile of the suction face and the pressure face, they, as distinct from the pads in the method [6], do not completely protect the bond areas against coming the bond preventing coating particles therein if possible violation of the integrity of said coating takes place.

However, owing to the projections, as well as owing to the pads in the method [6], gaps are left after the diffusion welding between the filler workpiece and the skin workpieces at areas not bonded in zones adjoining the pads. The gaps assist in breakage of the adhesion bond between the workpieces at the forming step, that is, without use of a separate step for breaking, as in the methods [1,2].

The microstructure analysis of the bond zone produced in the diffusion welding of samples, a shape of which allowed simulation of the diffusion welding conditions in the method [7], shows the presence of pores in said zone while a number of said pores is greater than that in the bond zones produced in the methods [1, 2, 6]. A reason for occurrence of the pores will be specified below in consideration of the essence of the invention as compared to the closest prior art. As to scores it should be noted that their depth and length were smaller than in [1, 2, 6].

It is an object of the invention to improve the quality of a blade due to improvement of the bond quality by means of diffusion welding skins and filler at simplification and labor consumption reduction of the production process for manufacturing the blade.

It is an additional object of the invention to provide further improvement of the quality of a blade and labor consumption reduction of the production process for manufacturing the blade.

### Disclosure of the Invention

Said basic object is accomplished by a method for manufacturing a hollow fan blade of a titanium alloy, said blade consisting of skins and a filler forming stiffeners, said method comprising the step of working skin workpieces with a preformed blade root portion, during which working on surfaces of the skin workpieces, areas to be bonded to a filler workpiece are shaped in the form of projections with a surface flat in a cross-section, respectively, and areas to be not bonded to the filler workpiece are shaped in the form of recesses, wherein at least a part of a surface of recesses opposite to projections in a stack assembled for diffusion welding is made flat in a cross-section, and also comprising the steps of: applying a bond preventing coating onto surfaces of workpiece areas to be not bonded; assembling the skin and filler workpieces into a stack; diffusion welding the skin and filler workpieces; forming stiffeners by superplastic forming, said method further comprises the step of providing the skin and filler workpieces with an aerodynamic profile by applying a deforming load thereto, including forming a pressure face and a suction face of the blade and twisting its airfoil, said method being different from the closest prior art by making said projections and recesses on the surfaces of the skin workpieces prior to providing them with the aerodynamic profile, while the step of providing the workpieces with the aerodynamic profile is performed after diffusion welding.

The additional object of the invention is accomplished in cases of:
- applying a pressure to the workpieces to be welded from the side of a skin workpiece forming the pressure face of the blade at the step of diffusion welding;
- taking the filler workpiece having a grain size smaller than 1 µm.

### Explanation of Essence of the Invention

As already noted, the diffusion welding is one of the basic steps of the prior art methods for manufacturing a hollow fan blade and has an influence on the quality of the future article; along with this, the diffusion welding is accompanied generation of specific bond defects, such as micropores and scores, in a bond zone. When manufacturing articles different from the hollow fan blade, partial elimination of the micropores and scores is possible due to an increased deformation of the workpieces to be welded or due to an additional deformation of the bond zone. Elimination of the scores is also possible due to subsequent machining. When manufacturing the blades, the diffusion welding is used which - to avoid deterioration in the geometry of future ribs - assumes plastic deformation designed advantageously to establish a physical contact between the workpieces to be welded, while the machining is applicable only to blade edges at their outer sides.

The presence of an initial fine-grain structure in the thin-sheet filler workpiece [1, 2, 7] which in principle is not always the case or of special pads with the fine-grain structure [6], becomes one of the most effective techniques to improve the quality of the bond under such conditions. It should be noted that the fine-grain structure of the filler in the method [7] is partially lost in hot forging. The plasticity of the filler or pads caused by the fine-grain structure thereof provides better filling of microroughnesses on surfaces of the skins with a filler material in establishment of the physical contact thereby to assist in decrease of a number of pores. However, as the analysis of the prior art methods for manufacturing the blades shows the plasticity of the filler alone is insufficient to establish the physical contact without formation of pores. Therefore, from the viewpoint of the theory of plasticity, the use of laws of plastic deformation of the filler workpiece in contact with the skin workpiece becomes another effective technique to improve the quality of the bond. As a result of joint using the two said techniques, it is possible to generate the physical contact practically at the complete absence of pores. In order to subject the behavior of joined workpieces to said laws, it is necessary to make changes in the production process for manufacturing an article, for example, by introducing additional workpieces in the form of pads [6] or changing a shape of the deforming tool [8] or changing a shape of the workpieces, as in the method of the invention.

The bonding in the method of the invention is performed by diffusion welding a thin-sheet filler workpiece having an average grain size of 1 to 3 µm with projections on skin workpieces made of plates and thus having a grain size that under the as-delivered condition is larger than in the filler workpiece, and particularly is 7 to 10 µm. A particular grain size is stated here to demonstrate a difference that always presents in the structural states of the filler and skin workpieces prior to the step of diffusion welding.

Taking into account said difference in the structural states of the filler and skin workpieces and geometries thereof, the process of generating the physical contact therebetween in diffusion welding may be considered from the viewpoint of the theory of plasticity as a process of occurrence of plastic flow of a medium restricted by a plane when a hard die with a flat base is pressed in into said medium. The medium in the present case is the filler workpiece supported by the flat surface of the skin workpiece when a projection having a flat surface of another skin workpiece is pressed in into it. In doing so, it is possible to use the classical solution of the problem offered by Prandtl [4, 5]. According to the Prandtl solution, there is an assumption that deformations are small so that changes in a contour of a free surface are negligible. The latter assumption is completely applicable to the process of diffusion welding in the method for manufacturing a blade, because the deformation is necessary therein only to establish the physical contact between the workpieces. However, it should be noted that the physical contact is established under effect of the isocratic pressure acting on the skin and filler workpieces rigidly fastened in the stack along edges. Under said conditions, there are a common deflection of the skin workpieces and a bend of the filler workpiece relative to the projections. At the same time a deformation of the skins and filler is of small in value and depends upon the height of the projections and may occur only within the elastic domain. To a moment of complete closure of the surface to be welded for generation of the physical contact, both the deflection of the skin workpieces and the bend of the filler workpiece are eliminated under the projection. Further, there is a deflection of the skins under creeping conditions to form folds that will be disclosed in detail below, but this process runs already after establishment of the physical contact.

When a projection of the skin workpiece is pressed in into the filler workpiece triangular regions of the uniform stress state are formed below the projection and at sides thereof. At the same time, a material of the filler workpiece directly below the projection is subjected to uniform compression at zero slippage of surface of the skin and filler workpieces relative to each other. There are formed prime compression regions at the sides of the projection, said regions being parallel to a bond boundary. A negative effect of prime compression stresses on the process of generation of the physical contact was discussed in the analysis and criticism of the methods [1, 2]. Said stresses are beyond the bond zone here. When analyzing the method [6], it was noted the favorable effect of tensile stresses on the process of generation of the physical contact. However, the most preferable for generation of the physical contact are unconditionally uniform compression stresses at zero slippage of the joined surfaces relative to each other, wherein the material of the filler workpiece is subjected to said stresses in a zone being below the projection of the skin workpiece, that is, in the bond zone. The thus generated physical contact is a basis for qualitative bonding the filler to the skin by diffusion welding. Studies of a microstructure of a bond zone manufactured in accordance with the method of the invention shows practically complete absence of pores therein and significant reduction in the depth and length of scores as compared to [1, 2, 6].

There is also a difference between the grain size in the filler and skin workpieces in the closest prior art. Further, the skin workpieces also have projections with surfaces being flat in a cross-section. And at least a part of a surface of recesses taking part in generation of the physical contact between the skin and filler workpieces in diffusion welding is made flat in a cross-section. However, both projections and recesses in the three-dimensional space repeat the aerodynamic profile of the skin workpieces. In connection with the latter circumstance, there are no conditions in the closest prior art method that make it possible to draw an analogy between the process of generating the physical contact between the skin and filler workpieces and the press in of a hard die into a ductile medium restricted by a plane, and therefore to use the classic Prandtl solution to said medium in order to determine a nature of stress distribution.

The process of generating the physical contact during the diffusion welding in the closest prior art method is accompanied with slippage of the welded surfaces relative to each other due to their curvilinear profile which makes it impossible to create the uniform compression conditions in the bond zone and therefore makes it impossible to produce a bond without pores. Occurrence of pores yet more assists in absence of the complete identity in the profiles of surfaces to be welded because, as noted above in criticism of the closest prior art solution, the profiles of the filler workpiece and the skin workpiece is obtained by hot forging in different dies.

Despite the noted slippage of the welded surfaces relative to each other and their non-intimate contact between each other the press in of the projection of the skin workpiece into the filler workpiece nevertheless takes place which assists in reduction of the depth and length of scores. Therefore, the result accomplished in the method of the invention is comparable with the result accomplished in the closest prior art method.

As to simplification of the production process it should be noted that said result is accomplished in the method of the invention, first of all, due to simplifying the steps of machining the skin and filler workpieces and applying the bond preventing coating, which is promoted by the flat shape of their surfaces from the side to be bonded to the filler workpiece. The application of the coating is also promoted by presence of the recesses on the surfaces of the skins. The coating is applied particularly by sputtering thereof onto the surfaces of the recesses, wherein the surface of the projections are protected by a stencil. It is expedient to use a metal sheet or plate as a stencil, said sheet or plate being capable of providing an intimate adjacency to the projection of the skin already due to its own weight. To prevent movement of the plate, it is connected to the workpiece by means of pins positioned in mounting holes of the skin workpieces and the stencil plate.

Greater simplification of the process and reduction of the labor consumption in the manufacture of a blade is possible due to a technique consisting in application of a welding pressure to the welded workpieces from the side of the skin workpiece that forms a suction face of the blade. Generally, it is possible to apply the isostatic pressure as in the method [7]. As to the method [7], it is the most acceptable variant because the workpieces having a sufficiently complicated aerodynamic profile are connected. At the same time, as noted in criticism of the closest prior art solution, folds are generated at the outer surfaces of the skin workpieces, a depth of said folds depending upon the height of the projections at the inner surfaces of the skins. In progress of superplastic forming, the folds at the surface of the skin workpiece that forms the suction face of the blade are smoothed while the folds at the surface of the skin workpiece that form the pressure face of the blade are retained, and they may be removed only by machining. Realization thereof is very difficult, especially in the method [7], because the above-noted profile of the workpieces presents. The need of additional machining complicates the production process for manufacturing the blade. The presence of the flat stack in the method of the invention allows application of a pressure thereto only from one side, exactly, from the side of the skin workpiece that forms the suction face of the blade, and thereby to eliminate the need of machining the blade airfoil portion from the side of the pressure face.

Returning to the question of the filler plasticity, it is necessary to note again the difference that always presents in the structural states of the filler and skin workpieces prior to the step of diffusion welding. Under the uniform compression conditions created in the method of the invention, the ductile material of the filler will effectively fill microroughnesses on the surfaces of the skins. At the same time, if the filler with a grain size of about 3 µm is used, its deformation in establishment of the physical contact occurs at a rate of ∼1×10⁻³ sec⁻¹. If the filler with a grain size smaller than 1 µm is used, its deformation in establishment of the physical contact occurs at a higher rate. Thus, a time of running the diffusion processes increases at a fixed time of the diffusion welding step with taking into account the shortening of a time for generation of the physical contact; this will have a favorable influence on the quality of bonding the filler with the skins as well.

The objects of the invention are accomplished by the entire combination of features stated in the independent claims and dependent claims.

As to the height of the projections, the depth of the recesses and the radius of coupling therebetween, criteria of their selection are kept the same as in the closest prior art. At the same time, the noted positive effect of the projections on the quality of bonding the skin and filler workpieces does not depend upon the height of the projections.

It is also necessary to note that not the entire surface of the recesses can be flat. In particular, similar to the closest prior art method, grooves preventing the possibility of violating the integrity of the bond preventing coating can be made in the recesses.

Based on the review of the current prior art, the selected similar prior art solutions [1,2, 6, 7] as well as the technical solution [8] that demonstrate the need to take into account the statements of the theory of plasticity [4, 5] when carrying out the diffusion welding process, the conclusion is possible that the claimed solution meets the requirements of novelty and inventive step.

As to industrial applicability of the method of the invention, it should be noted that the method reflects the production process for manufacturing a hollow wide-chord fan blade for an engine of new generation currently developed by Open Joint Stock Company "Aviadvigatel" (the City of Perm) with attraction of science advantages achieved at the Institute for Problems of Metal Superplasticity (the City of Ufa) being the Institution of the Russian Academy of Sciences. A particular embodiment of a simulator for the hollow wide-chord fan blade for an aircraft engine confirms such the possibility. The simulator is a reduction of the real blade; therefore, the term "blade" is further used in description of the embodiment.

### Brief Description of Drawings

Fig. 1 is a sectional view of a hollow fan blade along an airfoil portion;
Fig. 2 is a diagrammatic view that explains the step of working skin workpieces;
Fig. 3 is a diagrammatic view that explains the step of applying a bond preventing coating of workpieces;
Fig. 4 is a diagrammatic view that explains the step of assembling a stack;
Fig. 5 shows a fragmentary view of the stack of workpieces at a time of establishing a physical contact between filler and skin workpieces;
Fig. 6 shows a fragmentary view of the stack of workpieces after diffusion welding;
Fig. 7 shows a stack of workpieces having an aerodynamic profile;
Fig. 8 is a photo of the blade before finishing machining;
Fig. 9 is a photo of the blade after the finishing machining;
Fig. 10 shows a microstructure of a zone of bonding skins with a filler.

### Best Method of Currying out the Invention

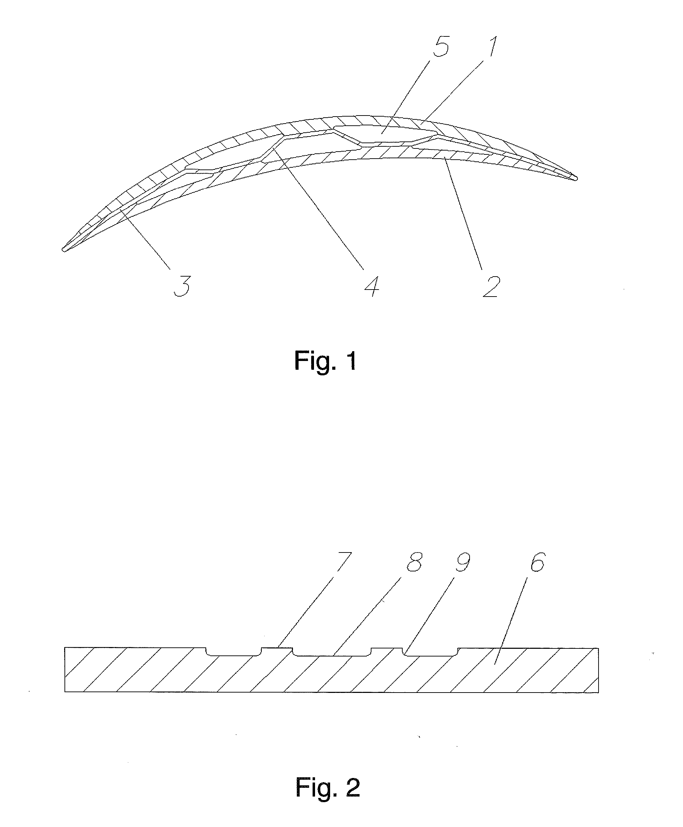

Fig.1 shows a sectional view of a hollow fan blade along an airfoil portion. The airfoil portion of the blade has an aerodynamic profile. A skin 1 forms a suction face of the blade while a skin 2 forms a pressure face of the blade. There is a filler 3 arranged between the skins 1, 2 and forming stiffeners 4 in a cavity 5.

The method for carrying out a hollow fan blade is carried out as follows.

Three sheet workpieces are used to manufacture the blade, two being for manufacture of skins and one being for manufacture of the filler.

At the first step (Fig.2), there is working of a skin workpiece 6 that forms the pressure face of the blade to produce projections 7 and recesses 8, respectively, on at least one its surface. The projections 7 and the recesses 8 have flat surfaces and are coupled between each other along a radius 9. Machining of other outer surface of the blade is also possible at this step to obtain process zones at both ends of the workpiece and the root portion (not shown in the Figures). The preliminary process zones can be formed by hot die forging. At this step, mounting holes (not shown in the Figures) are also made in the skin workpiece. In addition, channels (not shown in the Figures) for passage of gas in superplastic forming are made in the process zone from the side of the root portion on the surface of the skin workpiece at the side of the projections and recesses.

The skin workpiece that forms the suction face of the blade is worked in a similar way.

The mounting holes are made in the filler workpiece as well.

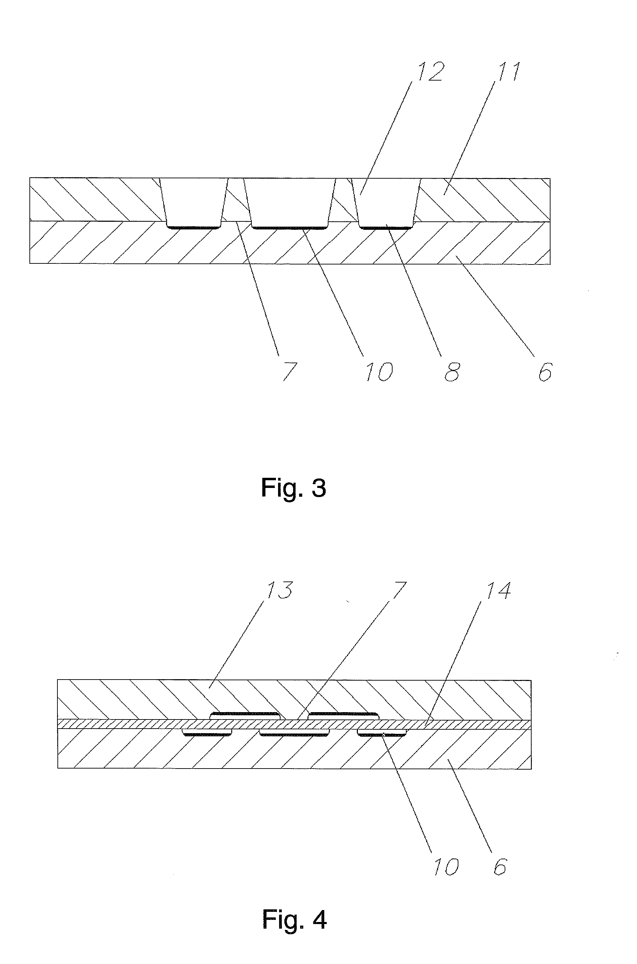

At the second step (Fig.3), a coating 10 that prevents bonding the workpieces in diffusion welding is applied onto the surfaces of the recesses 8. Flat surfaces of the workpieces, including the projections 7, allows application of the coating by using the simplest fixtures, for example, a metallic stencil 1 having slits 12 shaped as flares whose dimension along the surfaces of the skin workpiece 6 corresponds to the dimension of the recesses 8. Said shape of the stencil surface facilitates application of the coating.

The stencil is assembled with the skin workpiece in accordance with the mounting holes (not shown in the Figures). The stencil has a flat polished surface. The intimate pressing of the stencil to the surface of the workpiece is provided in assemblage, for example, due to the own weight of the stencil.

The coating is applied by sputtering layer by layer up to a predetermined thickness, while each layer is dried prior to application of the next. To remove volatile components from the coating material, the skin workpieces are subjected to thermal treatment.

A sheet filler workpiece 14 is positioned between skin workpieces 6 and 13 in assembling the stack (Fig. 4), said workpieces being registered in accordance with the mounting holes by using pins (not shown in the Figures). The flat surfaces of the projections 7 in the assembled stack are in contact with the filler workpiece 14. Such a contact protects the bond areas against particles of a material of the coating 10 that come therein when the integrity of the coating is violated. The assembled stack is sealed along its contour by means of a weld made by inert-gas argon-arc welding. A nipple for connection to a pipe (not shown in the Figures) is welded to an end face of the stack. The interior of the stack is vacuumed by connection of the pipe to a vacuum pump.

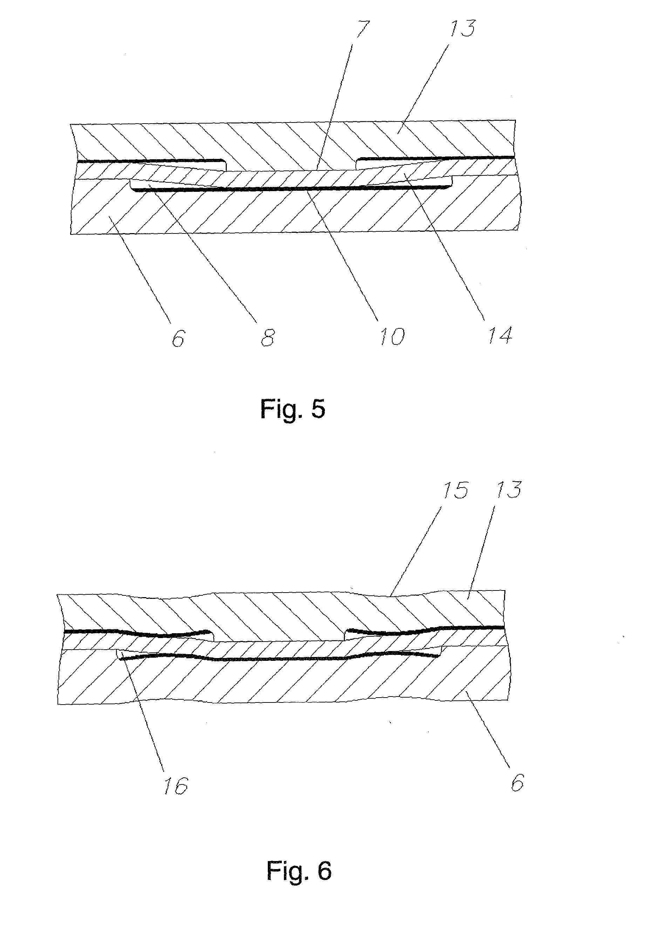

The assembled stack is placed into an isostatic chamber, and the diffusion welding of the skin and filler workpieces is performed. The skin workpieces 6, 13 are deflected to meet each other under action of an applied pressure and bend the filler workipiece 14. As a result, the filler workpiece 14 is pressed with the projections 7 to the flat surfaces of the recesses 8 having the coating 10 applied thereto. A physical contact between the skin and filler workpieces occurs. Fig. 5 shows a fragmentary view of the stack of workpieces, said fragmentary view illustrating the process of generating the physical contact. Because a value of the deflection of the skin workpieces 6, 13 is small, it is not shown in the fragmentary view.

Further, a total deflection of the skin workpieces is eliminated after establishment of the physical contact, but the material of the skin workpieces 6, 13 fills the recesses 8 due to creep during diffusion welding. As a result, folds 15 are generated at the surfaces of the skin workpieces 6, 13, a size of said folds depending upon the height of the projections and the depth of the recesses. The recesses are not completely filled with the materials of the skin workpieces for a time of the diffusion welding, and gaps 16 are left in a zone adjoining the projections. Fig. 6 shows a fragmentary view of the stack of workpieces after diffusion welding.

The folds at the outer surface of the skin workpiece that forms the suction face of the blade are removed in subsequent superplastic forming due to increase of an arc length of the suction face. The folds at the outer surface of the skin workpiece that forms the pressure face are removed usually by machining, because an arc length of the pressure face does not vary in superplastic forming.

To exclude the folds on the skin workpiece that forms the pressure face, it is recommended to apply a pressure necessary for diffusion welding from the side of the skin workpiece that forms the suction face, for example, using a membrane (not shown in the Figures).

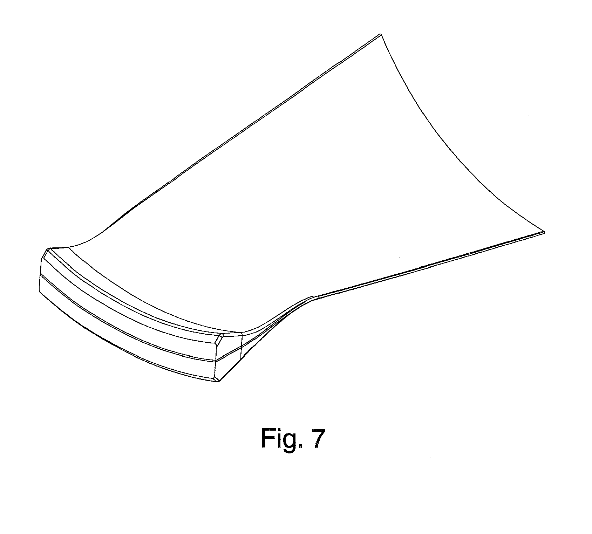

After diffusion welding, trunnions (not shown in the Figures) are turned in the process zones of the workpieces. Next, the skin and filler workpieces are provided with an aerodynamic profile. The present step is preformed in two sub-steps. The first sub-step comprises bending the stack of the workpieces, including the root portion, to form the suction face and the pressure face. The second sub-step comprises twisting the airfoil portion. When a special fixture, such as disclosed in [3], is used, said sub-steps can be overlapped. The stack of the workpieces having the aerodynamic profile is as shown in Fig. 7.

To produce the inner cavity 5 and the stiffeners 4 (Fig. 1), superplastic forming is performed. To this end, the stack of the workpieces is placed into a mould and is mounted by means of trunnions between dies. The assembly is heated, and the cavity of the stack is pressurized by gas in a mode that provides deformation of the filler workpiece in a rate range (10⁻⁴ ... 10⁻² sec⁻¹) of superplasticity. At the same time, the deformation rate of the skin workpiece that forms the suction face of the blade may go beyond said range due to the difference in grain sizes.

Prior to the beginning of proper forming, a gas pressure is supplied into the interior of the stack at room temperature in order to separate the skin and filler workpieces at the coated areas. Similar to the method [7], the presence of the gaps 16 in the method of the invention facilitates passage of gas in separation of the workpieces.

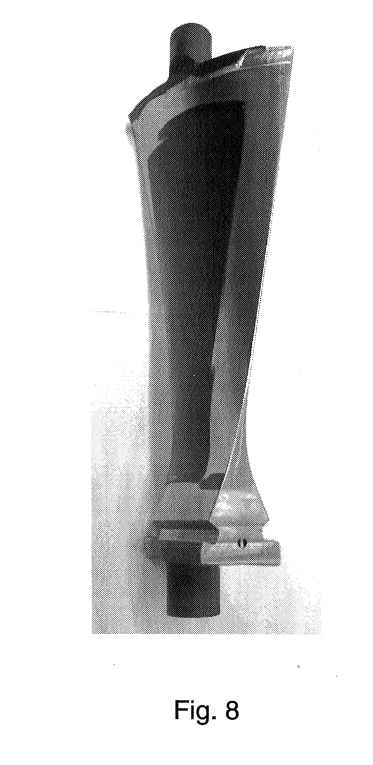

Fig. 8 is a photo of the blade manufactured by the method of the invention before finishing machining. The photo shows the process zones including said trunnions and associated channels made in each skin for passage of gas in superplastic forming.

To produce the finished blade, the steps of finishing machining the root portion and edges of the airfoil portion and also of polishing the surface of the blade airfoil portion are performed after the listed steps.

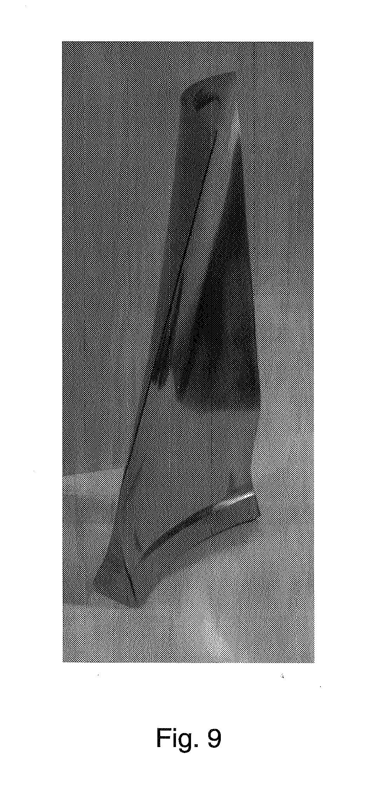

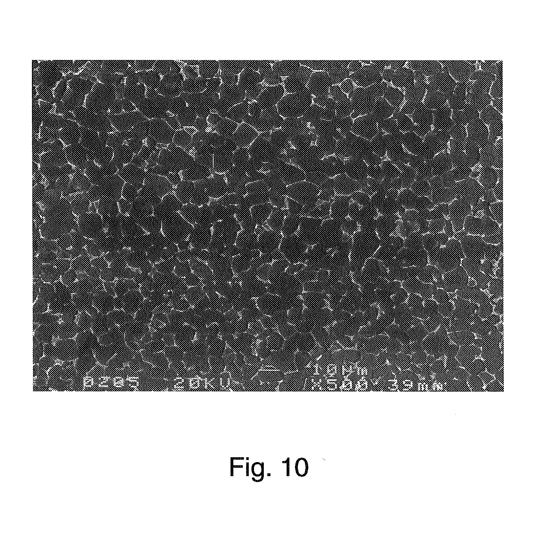

Fig. 9 is a photo of the finished blade. Fig. 10 shows a microstructure of a zone of bonding skins with a filler.

### Particular Embodiment

The titanium alloy BT6 (Ti-6Al-4V) was used as a material for manufacturing the fan blade. This embodiment does not exclude use of other titanium alloys for manufacturing the fan blade.

Two skin workpieces having dimensions of 290×150 mm were cut out of a commercial plate of 20 mm thick with a grain size of 8 µm. A filler workpiece having dimensions of 290x 150 mm was cut out of a commercial sheet of 0.8 mm thick with a grain size of 2 µm.

The skin workpieces were machined to preform an airfoil portion and a root portion of the blade. Recesses having a depth of 0.3 mm was milled at the flat sides of the skin workpieces, said recesses representing areas to be not bonded. The surfaces of the thus formed projections representing areas to be bonded were polished. The filler workpiece was polished at both sides.

Prior to apply a bond preventing coating, the surfaces of the skin workpieces were degreased.

A stencil was used to apply the coating. A coating thickness was set to 40 to 60 µm. To remove volatile components of the coating, the skin workpieces were placed into a vacuum furnace and heated up to a temperature of 150°C and held for 30 min.

Next, the surfaces of the filler workpiece were cleaned, and additionally, the surfaces of the skin workpieces were cleaned.

The workpieces were assembled into a stack sealed by argon-arc welding along the contour.

Then the stack is placed into the die tooling. The cavity between the workpieces was vacuumed down to a depth of 1.33 Pa. The die accessory was placed into an electrical furnace. After heating to a temperature of 900°C, a pressure of 3 MPa was applied to the stack of the workpieces by means of a flexible membrane, and the stack was held under such conditions for 2 hours to perform diffusion welding.

After diffusion welding, trunnions are turned in the process zones of the workpieces.

The skin and filler workpieces are provided with an aerodynamic profile by means of a special fixture, such as disclosed in [3]. This step was performed at a temperature of 800°C.

After provision of the stack with an aerodynamic profile, it was mounted into the mould by means of the trunnions. Dies of the mould were fixed by means of wedge connections. A nipple of the stack was connected to a pipe for supplying a working fluid (argon). Prior to heating, gas was supplied into the cavity of the stack at a pressure of 0.2 MPa to separate the workpieces at the coated areas. The mould was heated in the electrical furnace. The forming was performed at a temperature of 900°C thereby to develop a gas pressure in the cavity of the stack according to a mode that provides deformation of the sheet filler workpiece in a deformation rate range of 10⁻⁴... 10⁻² sec⁻¹. Maximum gas pressure was 3 MPa. After forming, the blade was extracted (Fig. 8) and subjected to finishing machining (Fig. 9).

Samples were cut out from the finished article for metallographic studies. Fig. 10 shows a microstructure of the bond zone, said microstructure confirming the absence of pores in the zone of bonding the skin to the filler.

### References

1. GB Patent No. 2095137, B21D 53/78, 1973.
2. EP Patent No. 0568201, B21D 53/78,1993.
3. GB Patent No. 2073631, B21D 53/78, 1980.
4. Ishlinsky, A.Yu., Ivlev, D.D. Mathematical Theory of Plasticity. M., FIZMATLIT, 2001, 704 pages.
5. Kachanov, L. M. Fundamentals of Theory of Plasticity. M., Nauka, 1969, 420 pages.
6. RU Patent No. 2291019, B21D 53/78, 2007.
7. US Patent No. 5826332, B23P 15/00, 1998.
8. Grigor'evsky, V.I., Akinin, V.K. Some Aspects of Plastic Deformation of Metal within Contact Zone in Diffusion Welding of Thin-Wall Structures//Welding Engineering, 1988, No. 11, p.31-33.

## Claims

1. A method for manufacturing a hollow fan blade of a titanium alloy, said blade consisting of skins and a filler forming stiffeners, said method comprising the step of working skin workpieces with a preformed blade root portion, during which working on surfaces of the skin workpieces, areas to be bonded to a filler workpiece are shaped in the form of projections with a surface flat in a cross-section, and areas to be not bonded to the filler workpiece are shaped in the form of recesses, respectively, wherein at least a part of a surface of recesses opposite to projections in a stack assembled for diffusion welding is made flat in a cross-section, and also comprising the steps of: applying a bond preventing coating onto surfaces of workpiece areas to be not bonded; assembling the skin and filler workpieces into a stack; diffusion welding the skin and filler workpieces; forming stiffeners by superplastic forming, the method further comprising the step of providing the skin and filler workpieces with an aerodynamic profile by applying a deforming load thereto, including forming a pressure face and a suction face of the blade and twisting its airfoil, said method being **characterized in that** said projections and recesses are made on the surfaces of the skin workpieces prior to providing them with the aerodynamic profile, while the step of providing the workpieces with the aerodynamic profile is performed after diffusion welding.

2. The method according to claim 1, **characterized in that** the step of diffusion welding comprises applying a pressure to the workpieces to be welded from the side of a skin workpiece forming the pressure face of the blade.

3. The method according to claim 1, **characterized in that** the filler workpiece having a grain size smaller than 1 µm is used.
